(19) Europäisches Patentamt
European Patent Office
Office européen des brevets

(11) **EP 3 381 119 B1**

(12) **EUROPÄISCHE PATENTSCHRIFT**

(45) Veröffentlichungstag und Bekanntmachung des Hinweises auf die Patenterteilung:
**08.01.2020   Patentblatt 2020/02**

(21) Anmeldenummer: **16790623.9**

(22) Anmeldetag: **04.11.2016**

(51) Int Cl.:
**H02P 1/18** *(2006.01)*

(86) Internationale Anmeldenummer:
**PCT/EP2016/076661**

(87) Internationale Veröffentlichungsnummer:
**WO 2017/089094 (01.06.2017 Gazette 2017/22)**

(54) **VERFAHREN ZUR STROMREGELUNG EINER INDUKTIVEN LAST**

METHOD FOR CONTROLLING THE CURRENT OF AN INDUCTIVE LOAD

PROCÉDÉ DE RÉGULATION EN COURANT D'UNE CHARGE INDUCTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2015   DE 102015223151**

(43) Veröffentlichungstag der Anmeldung:
**03.10.2018   Patentblatt 2018/40**

(73) Patentinhaber: **Continental Teves AG & Co. OHG 60488 Frankfurt am Main (DE)**

(72) Erfinder:
• **MORSCHEL, Dirk**
  **61239 Ober-Mörlen (DE)**
• **MÜLLER, Jürgen**
  **61381 Friedrichsdorf (DE)**
• **SCHMITZ, Axel**
  **65760 Eschborn (DE)**

(56) Entgegenhaltungen:
**DE-A1-102014 208 066**

**Beschreibung**

Die Erfindung betrifft ein Verfahren zur Stromregelung eines Laststromes einer induktiven Last gemäß dem Oberbegriff des Patentanspruchs 1 sowie eine elektronische Schaltungsanordnung gemäß dem Oberbegriff des Patentanspruchs 9.

In heutigen Kraftfahrzeugen wird eine Vielzahl von elektrischen oder elektronischen Einrichtungen mit induktiven Lasten, z.B. Ventile, Elektromotoren oder Relais, mittels Treiberstufen, üblicherweise Schalttransistoren, pulsweitenmoduliert angesteuert. Die PWM-Regelung kann somit beispielsweise zum Betrieb eines Elektromotors eines Starters zum Start einer Brennkraftmaschine oder für den Druckaufbau einer Bremsanlage Anwendung finden. Bei herkömmlichen Startverfahren muss durch die Fahrzeugbatterie ein vergleichsweise hoher Einschaltstrom bereitgestellt werden, welcher zu einem Abfall der Klemmenspannung der Fahrzeugbatterie führen kann.

Dieses Problem löst die gattungsbildende DE 10 2010 063 744 A1 dadurch, dass zur Begrenzung des Stromes während der Startphase mittels eines FET-Transistors ein Strombegrenzungswiderstand in Reihe zur induktiven Last geschaltet wird, so dass ein Grundstrom fließt, wenn der FET-Transistor im leitfähigen Zustand ist. Parallel zur Serienschaltung aus FET-Transistor und Strombegrenzungswiderstand ist eine Serienschaltung aus einem weiteren PWM-geregelten FET-Transistor und einem weiteren Widerstand geschaltet. Mit der PWM-Regelung dieses weiteren FET-Transistors wird der Strom durch die Last geregelt, wobei im leitfähigen Zustand dieses weiteren FET-Transistors der Pfad mit dem Strombegrenzungswiderstand kurzgeschlossenen und der Maximalstrom durch den zweiten Widerstand begrenzt wird. Nachteilig an dieser Vorgehensweise ist die beim Betrieb der induktiven Last erzeugt hohe Verlustleistung in Folge der vorgesehenen Widerstände zur Begrenzung des Stromes.

Dieser Nachteil wird durch die gattungsbildende DE 10 2014 208 066.5 überwunden, welche ein Verfahren zur pulsweitenmodulierten Stromregelung eines Laststromes einer induktiven Last beschreibt, bei welchem ein Stromistwert bestimmt wird, eine Regeldifferenz aus dem Stromistwert und einem Stromsollwert bestimmt wird, die Regeldifferenz als Eingangswert eines Regelalgorithmus zur Berechnung eines Tastverhältnisses der Pulsweitenmodulation ermittelt wird, und ein mit der induktiven Last in Serie geschalteter Leistungsschalter mit dem ermittelten Tastverhältnis angesteuert wird. Die induktive Last wird über einen Startmodus in einen Betriebsmodus geführt, indem zur Durchführung des Startmodus der Regelalgorithmus anhand einer Rampenfunktion die Stromsollwerte, zugehörige Tastverhältnisse und einen Stromzielwert ermittelt und der Laststrom bis zu dem Stromzielwert entsprechend der Rampenfunktion geregelt wird, und zur Durchführung des sich an den Startmodus anschließenden Betriebsmodus der Regelalgorithmus anhand eines oberen und eines unteren Stromsollwertes die Tastverhältnisse ermittelt, derart dass ausgehend von dem Stromzielwert der Laststrom zwischen dem oberen und unteren Stromsollwert geregelt wird. Dieser Vorgehensweise ist jedoch aufgrund des rampenförmigen Anstiegs und der damit im Zusammenhang stehenden Zeitverzögerung nicht auf alle Applikationen anwendbar.

Die Aufgabe der Erfindung besteht daher darin, ein eingangs genanntes Verfahren zu schaffen, mittels welchem eine verkürzte Einschaltzeit und/oder Zeitdauer zur Anpassung an einen geänderten Sollstromwert ermöglicht und zugleich hohe Ströme aufgrund dieser Änderung vermieden werden können und das einfach zu realisieren ist.

Diese Aufgabe wird gelöst durch ein Verfahren mit den Merkmalen des Patentanspruchs 1 sowie eine elektronische Schaltungsanordnung gemäß Anspruch 9.

Die Erfindung beschreibt Verfahren zur pulsmodulierten Stromregelung eines Laststromes einer induktiven Last mittels zumindest eines Schaltelements zum Schalten des Laststromes, bei welchem ein erster Betriebsmodus zum Betreiben der induktiven Last ausgeführt wird, wenn eine Änderung des Stromsollwerts erfolgt ist, wobei in dem ersten Betriebsmodus ein initialer Tastgrad der Pulsmodulation bestimmt wird, der zum Betreiben der induktiven Last in einem zweiten Betriebsmodus herangezogen wird, und in dem ersten Betriebsmodus ein Schaltzustand des Schaltelements in Abhängigkeit davon festgelegt wird, ob ein Stromsollwert des Laststroms höher oder niedriger ist, als ein Stromsollwert eines unmittelbar vorhergehenden Zyklus, wobei der Schaltzustand bis zum Erreichen eines Stromgrenzwerts beibehalten und bei Erreichen des Stromgrenzwerts umgeschaltet wird, wobei ein mehrfaches Umschalten des Schaltzustandes des Schaltelements zur Erzeugung einer vorgegebenen Anzahl an Perioden erfolgt, und anhand zumindest eines Teils der vorgegebenen Anzahl der Perioden der Tastgrad der Pulsmodulation bestimmt wird, der als initialer Tastgrad für den zweiten Betriebsmodus herangezogen wird. Durch die Erfindung wird damit in vorteilhafter Weise eine verkürzte Einschaltzeit und/oder Zeitdauer zur Anpassung an einen geänderten Sollstromwert ermöglicht und zugleich hohe Ströme aufgrund dieser Änderung ermöglicht und es können zugleich hohe Ströme beim Einschalten der induktiven Last vermieden werden. Weiterhin ist eine vergleichsweise einfache Realisierung möglich. Ein Stromgrenzwert gilt insbesondere dann als erreicht, wenn bei einem ansteigenden Strom, bspw. wenn der Stromsollwert angehoben wird, der erfasste Stromistwert größer oder gleich dem Stromgrenzwert ist und bei einem fallenden Strom, bspw. wenn der Stromsollwert abgesenkt wird, der erfasste Stromistwert kleiner oder gleich dem Stromgrenzwert ist.

Anhand zumindest des Teils der vorgegebenen Anzahl der Perioden wird bevorzugt ein mittlerer Tastgrad bestimmt, welcher als initialer Tastgrad für den zweiten Betriebsmodus herangezogen wird. Dadurch kann der Tastgrad für den zweiten Betriebsmodus unter Verwendung einfachster Mittel vergleichsweise schnell bestimmt und vorgegeben werden.

Bevorzugt erfolgt nach einem Erreichen eines Stromgrenzwerts eine weitere Änderung des Schaltzustands des Schaltelements bei Ablauf einer Periodendauer einer jeweiligen Periode. Je nach technischer Realisierung der Auslösung zum Umschalten des Schaltzustands kann bei Ablauf einer Periodendauer beispielsweise unmittelbar vor, während oder nach einem Umschalten in eine nachfolgende Periode bedeuten.

Entsprechend einer vorteilhaften Weiterbildung der Erfindung wird der initiale Tastgrad zur Heranziehung in dem zweiten Betriebsmodus unter Heranziehung einer mittleren Zeitdauer wenigstens eines der Schaltzustände des Schaltelements über zumindest einen Teil der Anzahl der Perioden berechnet.

Zweckmäßigerweise wird der initiale Tastgrad zur Heranziehung in dem zweiten Betriebsmodus unter Heranziehung einer mittleren Einschaltzeit des Schaltelements über zumindest einen Teil der Anzahl der Perioden berechnet.

Eine Periodendauer der Perioden wird bevorzugt mittels eines Zeitgebers vorgegeben. Zweckmäßigerweise handelt es sich bei dem Zeitgeber um einen Zähler, welcher nach einem Erreichen eines vorgegebenen Maximalwerts erneut startet. Bevorzugt ist der Maximalwert des Zählers ein von der Frequenz der Pulsmodulation abhängiger bzw. mit dieser sich ändernder Wert.

Gemäß eines Ausführungsbeispiels der Erfindung wird ausgehend von einem in dem ersten Betriebsmodus ermittelten initialen Tastgrad der Tastgrad während des zweiten Betriebsmodus unter Berücksichtigung wenigstens eines Stromgrenzwertes vorgegeben.

Ausgehend von einem in dem ersten Betriebsmodus ermittelten initialen Tastgrad wird der Tastgrad während des zweiten Betriebsmodus entsprechend eines Ausführungsbeispiels unter Berücksichtigung eines oberen und eines unteren Stromgrenzwertes derart vorgegeben, dass der Laststrom zwischen dem oberen und unteren Stromgrenzwert geregelt wird.

In dem zweiten Betriebsmodus wird entsprechend einer Weiterbildung der Erfindung ein Stromistwert bestimmt, eine Regelabweichung aus dem Stromistwert und einem Stromsollwert erfasst und die Regelabweichung zur Berechnung eines Tastverhältnisses der Pulsweitenmodulation herangezogen.

Nach einer vorteilhaften Ausgestaltung der Erfindung ist nach jeder Regelschleife eine Regelpausendauer vorgesehen. Nach dieser Regelpausendauer wird erst der Stromistwert ermittelt, mit dem dann ein erneuter Regeleingriff vorgenommen wird. Damit ist der Zeitpunkt des Regeleingriffes mit dem Abtastzeitpunkt des Stromsignals gekoppelt.

Das erfindungsgemäße Verfahren wird besonders bevorzugt im Wesentlichen mittels Software realisiert und kann beispielsweise in einem FPGA umgesetzt sein.

Weiterhin beschreibt die Erfindung eine elektronische Schaltungsanordnung zur pulsmodulierten Stromregelung eines Laststromes einer induktiven Last umfassend zumindest ein Schaltelement zum Schalten des Laststromes sowie eine Regelschaltung zum Ansteuern des Schaltelements, wobei die Schaltungsanordnung zum Betreiben der induktiven Last in einem ersten Betriebsmodus ausgestaltet ist, wenn eine Änderung des Stromsollwerts erfolgt ist, wobei in dem ersten Betriebsmodus ein initialer Tastgrad der Pulsmodulation bestimmbar ist, der zum Betreiben der induktiven Last in einem zweiten Betriebsmodus vorgesehen ist, und in dem ersten Betriebsmodus eine Festlegung eines Schaltzustands des Schaltelements in Abhängigkeit davon erfolgt, ob ein Stromsollwert des Laststroms höher oder niedriger ist, als ein Stromsollwert eines unmittelbar vorhergehenden Zyklus, wobei der Schaltzustand bis zum Erreichen eines Stromgrenzwerts beibehalten und bei Erreichen des Stromgrenzwerts umschaltbar ist, wobei ein mehrfaches Umschalten des Schaltzustandes des Schaltelements zur Erzeugung einer vorgegebenen Anzahl an Perioden erfolgt, und anhand zumindest eines Teils dieser Perioden der Tastgrad der Pulsmodulation bestimmt wird, der als initialer Tastgrad für den zweiten Betriebsmodus herangezogen wird.

Weitere bevorzugte Ausführungsformen ergeben sich aus der nachfolgenden Beschreibung von Ausführungsbeispielen an Hand von Figuren.

In Prinzipdarstellung zeigen:

Fig. 1    ein Blockschaltbild einer Schaltungsanordnung zur Stromregelung einer induktiven Last gemäß des erfindungsgemäßen Verfahrens,

Fig. 2    ein Zeit-Strom-Diagramm zur Darstellung des zeitlichen Verlaufes des geregelten Stromes der induktiven Last,

Fig. 3    ein Flussdiagramm zur Erläuterung der Berechnung des Startwerts des Tastgrades der Stromregelung der induktiven Last bei einer Änderung des Stromsollwerts des Stromes während eines Betriebsmodus I und

Fig. 4    ein Flussdiagramm zur Erläuterung der Stromregelung der induktiven Last in einem Betriebsmodus II.

Um eine kurze und einfache Beschreibung der Ausführungsbeispiele zu ermöglichen, werden gleiche Elemente mit den gleichen Bezugszeichen versehen.

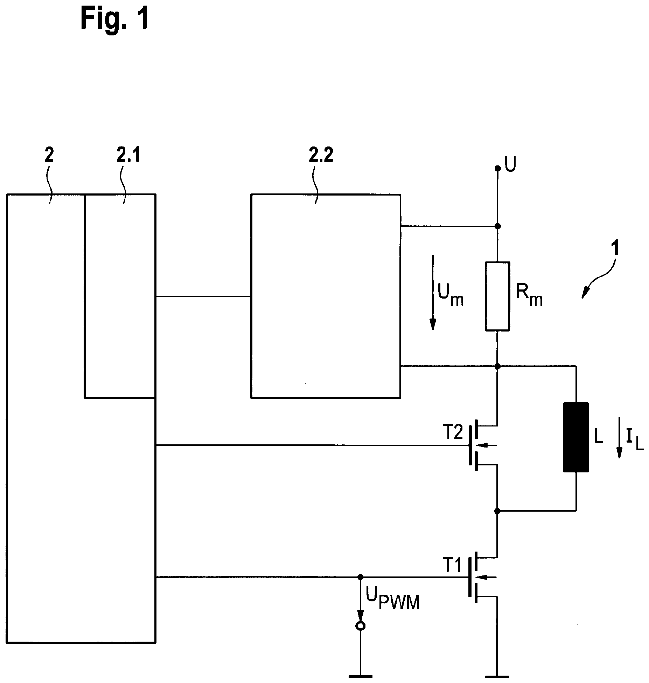

Die Fig. 1 zeigt in schematischer Darstellung einen Laststromkreis 1 mit einer Ventilspule zum Betrieb eines elektrohydraulischen oder elektropneumatischen Ventils einer Kraftfahrzeugbremsanlage als induktive Last L und einen zu Last L in Reihe geschalteten FET-Transistor T1 als Laststromschalter sowie eine Regelschaltung 2 zur Ansteuerung des FET-Transistors T1 und Ausführung des erfindungsgemäßen Regelungsverfahrens. Hierzu wird ein von der Regelschaltung 2 erzeugtes PWM-Spannungssignal $U_{PWM}$ der Gate-Elektrode von FET-Transistor T1 zugeführt, dessen Tastgrad (Verhältnis der Impulsdauer zur Periodendauer) entsprechen der Stromanforderung eingestellt wird. Im Laststrompfad ist ein in Reihe zu Last L angeordneter Messwiderstand $R_m$ vorgesehen, wobei der Stromistwert $I_{IST}$ des Laststroms $I_L$ mittels Strommessverstärker 2.2 und Regelschaltung 2 aus der über Messwiderstand $R_m$ anliegenden Messspannung $U_m$ bestimmt wird. Der die Serienschaltung aus dem FET-Transistor T1, der induktiven Last L und dem Messwiderstand $R_m$ umfassende Laststromkreis 1 ist an eine Spannungsversorgung U, z.B. eine Fahrzeugbatterie, angeschlossen, wobei der FET-Transistor T1 beispielsgemäß in Low-Side Anordnung vorliegt. Parallel zur induktiven Last L ist ein weiterer FET-Transistor T2 gegen die Masse geschaltet, welcher von der Regelschaltung 2 als Freilaufdiode betreibbar ist. Die Regelschaltung 2 weist entsprechend dieses Ausführungsbeispiels einen A/D-Wandler 2.1 auf, der das von Strommessverstärker 2.2 ausgegebene verstärkte Messsignal zur Verarbeitung durch Regelschaltung 2 digitalisiert.

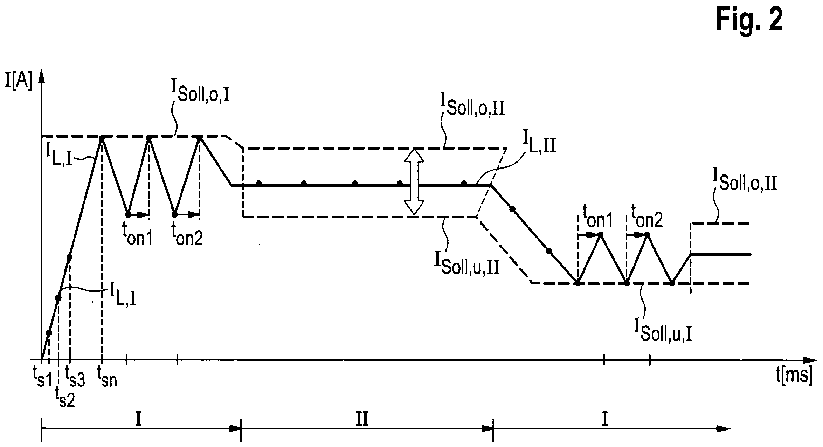

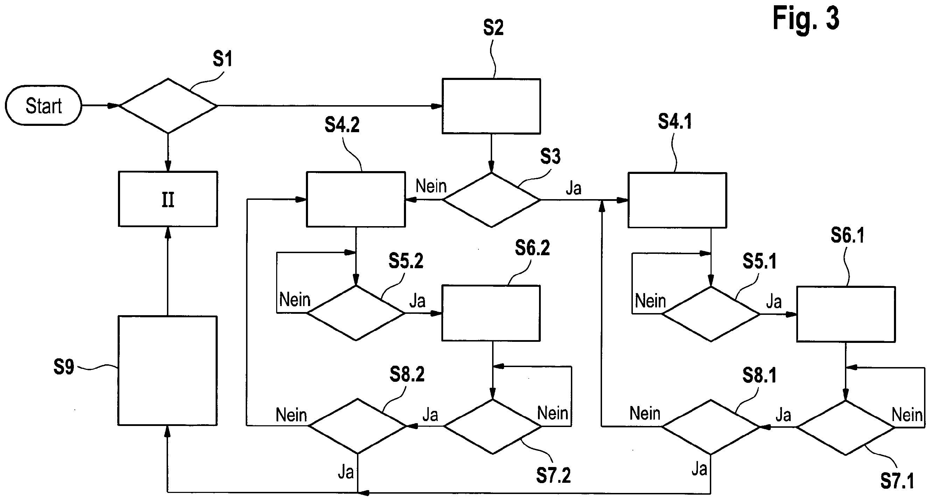

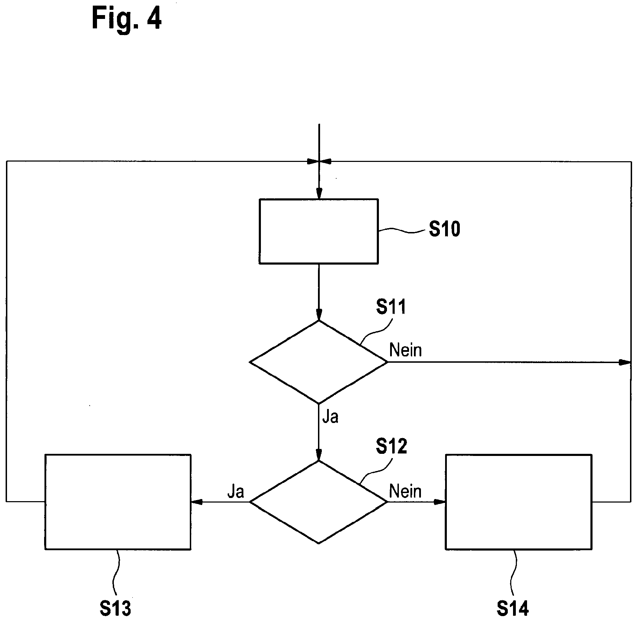

Das erfindungsgemäße Verfahren zum Betrieb einer Ventilspule L wird im Folgenden anhand des Zeit-Strom-Diagramms nach Figur 2 sowie der Block- und Flussdiagramme gemäß den Figuren 3 und 4 erläutert.

Allgemein gilt:

$$I = \frac{U}{R} DC$$

bzw.

$$DC = \frac{R}{U} I$$

mit

$$DC = \frac{t_{on}}{t_{on} + t_{off}}$$

Der Tastgrad DC wird durch die Versorgungsspannung U und den Gesamtwiderstand R des Laststromkreises, insbesondere dem Widerstand der Spule L und des Messwiderstands $R_m$, beeinflusst. Da diese im laufenden Betrieb, beispielsweise aufgrund von Temperatureinflüssen, variabel sind, kann aus einem vorgegebenen Tastgrad kein eindeutiger Laststrom $I_L$ (bzw. umgekehrt) abgeleitet werden.

Die Bestromung von Ventilspule L erfolgt daher in wenigstens zwei Phasen bzw. Betriebsmodi, wobei der Laststrom $I_L$, bei Feststellung einer Änderung des Stromsollwerts $I_{SOLL}$, dem neuen Stromsollwert $I_{SOLL}$ in einem Betriebsmodus I entsprechend den anhand Fig. 3 erläuterten Verfahrensschritten angenähert wird. Entsprechend der beispielhaften Darstellung nach Fig. 2 ist der neue Stromsollwert $I_{SOLL}$ höher als ein Stromsollwert $I_{Soll,t-1}$ eines vorhergehenden Zyklus, sodass im Betriebsmodus I der Laststrom $I_{L,I}$ erhöht wird. Bei Erreichen bzw. Überschreiten eines oberen Stromgrenzwerts $I_{SOLL,o,I}$ des Betriebsmodus I erfolgt für eine vorgegebene Zeitdauer keine weitere Ansteuerung, sodass der Laststrom $I_{L,I}$ abfällt, wobei die Ansteuerung anschließend bis zum Erreichen des oberen Stromgrenzwerts $I_{SOLL,o,I}$ fortgesetzt wird, woraufhin wiederum abgeschaltet wird. Unter Heranziehung der mittleren Einschaltzeit über eine Anzahl N an Perioden wird ein mittlerer Tastgrad $DC_{mean}$ bestimmt, wobei die Periodendauer T durch einen Zeitgeber, wie beispielsweise den Maximalwert eines Zählers, vorgebbar ist:

$$DC_{mean} = \frac{\frac{\Sigma t_{on}}{N}}{T} \qquad (1)$$

Auf Basis des geänderten Stromsollwerts $I_{SOLL}$ wird der Laststrom $I_L$ für den Betriebsmodus II durch Verwendung des mittleren Tastgrads $DC_{mean}$ eingeregelt.

Nach einer Bestimmung dieses Start-Tastgrades $DC_{mean}$ für den Betriebsmodus II schließt sich dieser an den Betriebsmodus I an, der entsprechend den Verfahrensschritten nach Figur 4 realisierbar ist und bei dem der Laststrom $I_L$, zwischen dem oberen Stromgrenzwert $I_{SOLL,o,II}$ und dem unteren Stromgrenzwert $I_{SOLL,u,II}$ geregelt wird. Für den Betriebsmodus II ist in Fig. 2 lediglich ein durch die PWM geregelter mittlerer Laststrom $I_L$ dargestellt.

Der obere Stromgrenzwert $I_{SOLL,o,I}$ des ersten Betriebsmodus I ist höher festgelegt, als der obere Stromgrenzwert $I_{SOLL,o,II}$ des zweiten Betriebsmodus II, insbesondere um zu erreichen, dass der mittlere Laststrom $I_L$ im Betriebsmodus II etwa mittig zwischen den Stromgrenzwerten verläuft, wobei berücksichtigt wird, dass das Ein- und Ausschaltverhalten des Laststromes $I_L$ einen exponentiellen Verlauf aufweist und ein mittlerer Strom daher niedriger als ein Mittelwert zwischen dem oberen $I_{SOLL,o,II}$ und dem unteren $I_{SOLL,u,II}$ Stromgrenzwert ist. Die beschriebene Vorgehensweise ist ebenfalls bei einer Absenkung des Sollstromwertes $I_{SOLL}$ anwendbar, wobei vorzugsweise keine Aufweitung des Toleranzbandes, durch entsprechende Festlegung des unteren Stromgrenzwerts $I_{SOLL,u,I}$, vorgesehen ist, um einen zu niedrigen Laststrom $I_L$ im Betriebsmodus I zu vermeiden.

Eine genauere Erläuterung der Berechnung des Startwerts des Tastgrades der Stromregelung während des Betriebsmodus I wird nachfolgend anhand der Figur 3 vorgenommen. Gemäß dem Flussdiagramm in Fig. 3 wird nach dem Start in einem ersten Verfahrensschritt S1 zunächst überprüft, ob eine Änderung des Stromsollwerts $I_{SOLL}$ im Vergleich zum vorhergehenden Zyklus vorliegt. Falls keine Änderung stattgefunden hat, wird in den Betriebsmodus II gewechselt bzw. dieser beibehalten. Hat stattdessen eine Änderung stattgefunden, wird gemäß Verfahrensschritt S2 ein Zeitgeber gestartet und geprüft, ob der Stromsollwert $I_{SOLL}$ größer als der Stromsollwert $I_{SOLL,t-1}$ des vorhergehenden Zyklus ist (S3).

Ist der Stromsollwert $I_{SOLL}$ beim Vergleich in Verfahrensschritt S3 nicht kleiner bzw. größer als der Stromsollwert $I_{Soll,t-1}$ des vorhergehenden Zyklus, soll also der Laststrom $I_L$ erhöht werden, wird in Verfahrensschritt S4.1 der Laststromkreis 1 mittels FET-Transistor T1 geschlossen, sodass es bei der Bestromung von Ventilspule L zu einem Anstieg des Laststroms $I_L$ kommt. In aufeinanderfolgenden Abtastzeitpunkten $t_{Si}$ (i = 1, 2,...), die sich durch eine Regelpausendauer $\Delta t$ von bspw. 200 µs unterscheiden, wird jeweils der Stromistwert $I_{IST}$ erfasst und in Schritt S5.1 daraufhin geprüft, ob der obere Stromgrenzwert $I_{SOLL,o,I}$ erreicht bzw. überschritten ist, wobei eine Wiederholung der Prüfung zyklisch so oft erfolgt, bis ein Überschreiten erkannt wird und darauf folgend der Laststrom $I_L$ mittels entsprechender Ansteuerung von FET-Transistor T1 in Verfahrensschritt S6.1 zumindest bis zum Überschreiten einer mittels des in Schritt S2 gestarteten Zeitgebers festgelegten Zeitdauer bzw. Periodendauer ausgeschaltet wird, wobei nach einem Überschreiten der festgelegten Zeitdauer des Zeitgebers die Zählung von neuem beginnt, sodass diese zyklisch durchlaufen wird. Nach einer Zeitdauer (S7.1) erfolgt eine Prüfung, ob die vorgegebene Anzahl der solchermaßen erzeugten PWM-Perioden erreicht ist, wobei auf Verfahrensschritt S4.1 zurückgesprungen wird, wenn weitere Perioden angedacht sind. Die Anzahl der solchermaßen erzeugten Perioden ist vorzugsweise anpassbar.

Mittels dieser PWM-Perioden wird auf Basis des Stromsollwerts $I_{SOLL}$ der mittlere Laststrom $I_L$ für den Betriebsmodus II eingeregelt. Ist die voreingestellte Anzahl N an Perioden erreicht, wird in Verfahrensschritt S9 eine definierte Anzahl der Einschaltzeiten $t_{on1}$, $t_{on2}$,... der Perioden herangezogen und daraus der entsprechende gemittelte Tastgrad $DC_{mean}$ anhand von Gleichung (1) berechnet. Dieser wird als Start-Tastgrad dem Stromregler für die Ausführung des Betriebsmodus II übergeben. Dabei können beispielsgemäß die Zeitdauern der letzten beiden Einschaltphasen $t_{on1}$, $t_{on2}$ herangezogen werden, um einen Mittelwert zu bilden:

$$t_{on\_mean} = (t_{on1}+t_{on2})/2.$$

Soll der Laststrom $I_L$ reduziert werden, ist also der vorgegebene Stromsollwert $I_{SOLL}$ beim Vergleich in Verfahrensschritt S3 kleiner als der Stromsollwert $I_{SOLL,t-1}$ des vorhergehenden Zyklus, wird der Laststromkreis 1 in Verfahrensschritt S4.2 mittels FET-Transistor T1 unterbrochen, woraufhin der Laststrom reduziert wird, und in S5.2 anschließend geprüft, ob der untere Stromgrenzwert $I_{SOLL,u,I}$ unterschritten ist, wobei eine Wiederholung der Prüfung so oft erfolgt, bis ein Unterschreiten erkannt wird und darauf folgend der Laststrom $I_L$ mittels entsprechender Ansteuerung von FET-Transistor T1 in Verfahrensschritt S6.2 für eine vorgegebene Zeitdauer $t_{on1}$,... eingeschaltet wird (S7.2). Ist die Zeitdauer $t_{on1}$ überschritten, erfolgt eine Prüfung, ob die vorgegebene Anzahl der solchermaßen erzeugten Perioden erreicht ist, wobei auf Verfahrensschritt S4.2 zurückgesprungen wird, wenn weitere Perioden vorgesehen sind. Ist die voreingestellte Anzahl N an Perioden erreicht, erfolgt in Verfahrensschritt S9 eine Berechnung des für den Betriebsmodus II heranzuziehenden Tastgrad $DC_{mean}$, der dem Stromregler zur Ausführung des Betriebsmodus II übergeben wird, wie bereits beschrieben wurde.

Die Fig. 4 zeigt ein Flussdiagramm zur Erläuterung der Stromregelung in Betriebsmodus II. Die Stellgröße, mit der nachgeregelt wird, ist in Betriebsmodus II ein fester Wert. Bewegt sich der Laststrom $I_L$ innerhalb der Stromgrenzen wird der Tastgrad nicht verändert. Der Zeitpunkt wann ein Regeleingriff vorgenommen wird, ist mit der Abtastzeit des Stromsignals gekoppelt. Gemäß dem Flussdiagramm in Fig. 4 erfolgt nach der Übergabe des Startwerts des Tastgrades zunächst eine Messung des Stromistwerts $I_{IST}$ (S10) und in Verfahrensschritt S11 eine Überprüfung, ob sich der solchermaßen ermittelte Laststromwert innerhalb der unteren $I_{SOLL,u,II}$ und oberen Stromgrenze $I_{SOLL,o,II}$ des Betriebsmodus II befindet. Befindet er sich innerhalb der Grenzen, wird zurück auf Schritt S10 gesprungen und eine erneute Messung des Stromistwerts $I_{IST}$ durchgeführt. Im Fall, dass der Laststrom $I_L$ bzw. der gemessene Stromistwert $I_{IST}$ außerhalb der Grenzen ist, wird in Schritt S12 geprüft, ob dieser größer als die obere Stromgrenze $I_{SOLL,o,II}$ ist und falls dies so ist, erfolgt eine Reduzierung des Tastgrades der PWM (S13). Ist dieser nicht größer wird eine Erhöhung des Tastgrades vorgenommen (S14).

Die Grenzwerte $I_{SOLL,u}$ und $I_{SOLL,o}$ können entsprechend einer bevorzugten Ausgestaltung der Erfindung auch zu einem einzigen Stromsollwert zusammengeführt werden, um die Regelung des Laststromes $I_{L,II}$ während des Betriebsmodus II bezüglich diesem einzigen Stromsollwert zu realisieren, wobei eine andauernde Anpassung durch die Regelung vorgenommen wird.

**Patentansprüche**

1. Verfahren zur pulsmodulierten (PWM) Stromregelung eines Laststromes ($I_L$) einer induktiven Last (L) mittels zumindest eines Schaltelements (T1) zum Schalten des Laststromes ($I_L$), bei welchem ein erster Betriebsmodus (I) zum Betreiben der induktiven Last (L) ausgeführt wird, wenn eine Änderung des Stromsollwerts ($I_{SOLL}$) erfolgt ist, wobei in dem ersten Betriebsmodus (I) ein initialer Tastgrad (DC) der Pulsmodulation (PWM) bestimmt wird, der zum Betreiben der induktiven Last (L) in einem zweiten Betriebsmodus (II) herangezogen wird, **dadurch gekennzeichnet, dass** in dem ersten Betriebsmodus (I) ein Schaltzustand des Schaltelements (T1) in Abhängigkeit davon festgelegt wird, ob ein Stromsollwert ($I_{SOLL}$) des Laststroms ($I_L$) höher oder niedriger ist, als ein Stromsollwert ($I_{Soll,t-1}$) eines unmittelbar vorhergehenden Zyklus, wobei der Schaltzustand bis zum Erreichen eines Stromgrenzwerts ($I_{SOLL,o,I}$, $I_{SOLL,u,I}$) beibehalten und bei Erreichen des Stromgrenzwerts ($I_{SOLL,o,I}$, $I_{SOLL,u,I}$) umgeschaltet wird, wobei ein mehrfaches Umschalten des Schaltzustandes des Schaltelements (T1) zur Erzeugung einer vorgegebenen Anzahl (N) an Perioden erfolgt, und anhand zumindest eines Teils der vorgegebenen Anzahl (N) der Perioden der Tastgrad (DC, $DC_{mean}$) der Pulsmodulation (PWM) bestimmt wird, der als initialer Tastgrad (DC) für den zweiten Betriebsmodus (II) herangezogen wird.

2. Verfahren nach Anspruch 1, **dadurch gekennzeichnet, dass** anhand zumindest des Teils der vorgegebenen Anzahl (N) der Perioden ein mittlerer Tastgrad (DC, $DC_{mean}$) bestimmt wird, welcher als initialer Tastgrad (DC) für den zweiten Betriebsmodus herangezogen wird.

3. Verfahren nach Anspruch 1 oder 2, **dadurch gekennzeichnet, dass** nach einem Erreichen eines Stromgrenzwerts ($I_{SOLL,o,I}$, $I_{SOLL,u,I}$) eine weitere Änderung des Schaltzustands des Schaltelements (T1) bei Ablauf einer Periodendauer einer jeweiligen Periode erfolgt.

4. Verfahren nach wenigstens einem der vorhergehenden Ansprüche, **dadurch gekennzeichnet, dass** der initiale Tastgrad (DC) zur Heranziehung in dem zweiten Betriebsmodus unter Heranziehung einer mittleren Zeitdauer wenigstens eines der Schaltzustände des Schaltelements (T1) über zumindest einen Teil der Anzahl (N) der Perioden berechnet wird.

5. Verfahren nach wenigstens einem der vorhergehenden Ansprüche, **dadurch gekennzeichnet, dass** der initiale Tastgrad (DC) unter Heranziehung einer mittleren Einschaltzeit des Schaltelements (T1) über zumindest einen Teil der Anzahl (N) der Perioden berechnet wird.

6. Verfahren nach wenigstens einem der vorhergehenden Ansprüche, **dadurch gekennzeichnet, dass** eine Periodendauer (T) der Perioden mittels eines Zeitgebers vorgegeben wird.

7. Verfahren nach wenigstens einem der vorhergehenden Ansprüche, **dadurch gekennzeichnet, dass** ausgehend von einem in dem ersten Betriebsmodus (I) ermittelten initialen Tastgrad (DC) der Tastgrad während des zweiten Betriebsmodus (II) unter Berücksichtigung wenigstens eines Stromgrenzwertes ($I_{SOLL,u,II}$, $I_{SOLL,o,II}$) vorgegeben wird.

8. Verfahren nach wenigstens einem der vorhergehenden Ansprüche, **dadurch gekennzeichnet, dass** in dem zweiten Betriebsmodus (II) ein Stromistwert ($I_{IST}$) bestimmt wird, eine Regelabweichung aus dem Stromistwert ($I_{IST}$) und einem Stromsollwert ($I_{SOLL}$) erfasst wird und die Regelabweichung zur Berechnung eines Tastverhältnisses (DC) der Pulsweitenmodulation (PWM) herangezogen wird.

9. Elektronische Schaltungsanordnung zur pulsmodulierten (PWM) Stromregelung eines Laststromes ($I_L$) einer induktiven Last (L) umfassend zumindest ein Schaltelement (T1) zum Schalten des Laststromes ($I_L$) sowie eine Regelschaltung (2) zum Ansteuern des Schaltelements (T1), wobei die Schaltungsanordnung zum Betreiben der induktiven Last (L) in einem ersten Betriebsmodus (I) ausgestaltet ist, wenn eine Änderung des Stromsollwerts ($I_{SOLL}$) erfolgt ist, wobei in dem ersten Betriebsmodus (I) ein initialer Tastgrad (DC) der Pulsmodulation (PWM) bestimmbar ist, der zum Betreiben der induktiven Last (L) in einem zweiten Betriebsmodus (II) vorgesehen ist, **dadurch gekennzeichnet, dass** in dem ersten Betriebsmodus (I) eine Festlegung eines Schaltzustands des Schaltelements (T1) in Abhängigkeit davon erfolgt, ob ein Stromsollwert ($I_{SOLL}$) des Laststroms ($I_L$) höher oder niedriger ist, als ein Stromsollwert ($I_{soll,t-1}$) eines unmittelbar vorhergehenden Zyklus, wobei der Schaltzustand bis zum Erreichen eines Stromgrenzwerts ($I_{SOLL,o,I}$, $I_{SOLL,u,I}$) beibehalten und bei Erreichen des Stromgrenzwerts ($I_{SOLL,o,I}$, $I_{SOLL,u,I}$) umschaltbar ist, wobei ein mehrfaches Umschalten des Schaltzustandes des Schaltelements (T1) zur Erzeugung einer vorgegebenen Anzahl (N) an Perioden erfolgt, und anhand zumindest eines Teils dieser Perioden der Tastgrad (DC, $DC_{mean}$) der Pulsmodulation (PWM) bestimmt wird, der als initialer Tastgrad (DC) für den zweiten Betriebsmodus (II) herangezogen wird.

**Claims**

1. Method for the pulse-modulated (PWM) current control of a load current ($I_L$) of an inductive load (L) by means of at least one switching element (T1) for switching the load current ($I_L$), in which a first operating mode (I) for operating the inductive load (L) is implemented when a change in the current setpoint value ($I_{SETPOINT}$) has been effected, wherein, in the first operating mode (I), an initial duty cycle (DC) of the pulse modulation (PWM) is determined, said duty cycle being used to operate the inductive load (L) in a second operating mode (II), **characterized in that**, in the first operating mode (I), a switching state of the switching element (T1) is set depending on whether a current setpoint value ($I_{SETPOINT}$) of the load current ($I_L$) is higher or lower than a current setpoint value ($I_{Setpoint,t-1}$) of a directly preceding cycle, wherein the switching state is retained until a current limit value ($I_{SETPOINT,o,I}$, $I_{SETPOINT,u,I}$) is reached and is switched over when the current limit value ($I_{SETPOINT,o,I}$, $I_{SETPOINT,u,I}$) is reached, wherein the switching state of the switching element (T1) is switched over multiple times to generate a prescribed number (N) of periods, and the duty cycle (DC, $DC_{mean}$) of the pulse modulation (PWM) is determined based on at least a portion of the prescribed number (N) of periods, said duty cycle being used as the initial duty cycle (DC) for the second operating mode (II).

2. Method according to Claim 1, **characterized in that** an average duty cycle (DC, $DC_{mean}$) is determined based on at least the portion of the prescribed number (N) of periods, said average duty cycle being used as the initial duty cycle (DC) for the second operating mode.

3. Method according to Claim 1 or 2, **characterized in that**, after a current limit value ($I_{SETPOINT,o,I}$, $I_{SETPOINT,u,I}$) has been reached, a further change in the switching state of the switching element (T1) is effected when a period duration of a respective period has elapsed.

4. Method according to at least one of the preceding claims, **characterized in that** the initial duty cycle (DC) for use in the second operating mode is calculated using an average length of time of at least one of the switching states of the switching element (T1) over at least a portion of the number (N) of periods.

5. Method according to at least one of the preceding claims, **characterized in that** the initial duty cycle (DC) is calculated using an average switch-on time of the switching element (T1) over at least a portion of the number (N) of periods.

6. Method according to at least one of the preceding claims, **characterized in that** a period duration (T) of the periods is prescribed by means of a timer.

7. Method according to at least one of the preceding claims, **characterized in that**, proceeding from an initial duty cycle (DC) identified in the first operating mode (I), the duty cycle during the second operating mode (II) is prescribed taking into account at least one current limit value ($I_{SETPOINT,u,II}$, $I_{SETPOINT,o,II}$).

8. Method according to at least one of the preceding claims, **characterized in that**, in the second operating mode (II), a current actual value ($I_{ACTUAL}$) is determined, a control deviation from the current actual value ($I_{ACTUAL}$) and a current setpoint value ($I_{SETPOINT}$) is detected and the control deviation is used to calculate a duty factor (DC) of the pulse-width modulation (PWM).

9. Electronic circuit arrangement for the pulse-modulated (PWM) current control of a load current ($I_L$) of an inductive load (L) comprising at least one switching element (T1) for switching the load current ($I_L$) and a control circuit (2) for actuating the switching element (T1), wherein the circuit arrangement is configured to operate the inductive load (L) in a first operating mode (I) when a change in the current setpoint value ($I_{SETPOINT}$) has been effected, wherein, in the first operating mode (I), an initial duty cycle (DC) of the pulse modulation (PWM) can be determined, said duty cycle being provided to operate the inductive load (L) in a second operating mode (II), **characterized in that**, in the first operating mode (I), a switching state of the switching element (T1) is set depending on whether a current setpoint value ($I_{SETPOINT}$) of the load current ($I_L$) is higher or lower than a current setpoint value ($I_{Setpoint,t-1}$) of a directly preceding cycle, wherein the switching state is retained until a current limit value ($I_{SETPOINT,o,I}$, $I_{SETPOINT,u,I}$) is reached and can be switched over when the current limit value ($I_{SETPOINT,o,I}$, $I_{SETPOINT,u,I}$) is reached, wherein the switching state of the switching element (T1) is switched over multiple times to generate a prescribed number (N) of periods, and the duty cycle (DC, $DC_{mean}$) of the pulse modulation (PWM) is determined based on at least a portion of said periods, said duty cycle being used as the initial duty cycle (DC) for the second operating mode (II) .

**Revendications**

1. Procédé de régulation en courant, à modulation d'impulsions (PWM), d'un courant de charge ($I_L$) d'une charge inductive (L) au moyen d'au moins un élément de commutation (T1) destiné à commuter le courant de charge ($I_L$), dans lequel un premier mode de fonctionnement (I) est mis en œuvre pour faire fonctionner la charge inductive (L) lorsqu'une modification de la valeur de courant de consigne ($I_{SOLL}$) est effectuée, dans lequel, dans le premier mode de fonctionnement (I), on détermine un rapport cyclique initial (DC) de la modulation d'impulsions (PWM) qui est utilisé pour faire fonctionner la charge inductive (L) dans un second mode de fonctionnement (II), **caractérisé en ce que**, dans le premier mode de fonctionnement (I), on règle un état de commutation de l'élément de commutation (T1) selon qu'une valeur de courant de consigne ($I_{SOLL}$) du courant de charge ($I_L$) est supérieure ou inférieure à une valeur de courant de consigne ($I_{SOLL,t-1}$) d'un cycle immédiatement précédent, dans lequel l'état de commutation est maintenu jusqu'à ce qu'une valeur limite de courant ($I_{SOLL,o,I}$, $I_{SOLL,u,I}$) soit atteinte et est commuté lorsque la valeur limite de courant ($I_{SOLL,o,I}$, $I_{SOLL,u,I}$) est atteinte, dans lequel on effectue une pluralité de commutations de l'état de commutation de l'élément de commutation (T1) pour générer un nombre prédéterminé (N) de périodes, et on détermine, sur la base d'au moins une partie du nombre prédéterminé (N) des périodes, le rapport cyclique (DC, $DC_{mean}$) de la modulation d'impulsions (PWM) qui est utilisé comme rapport cyclique initial (DC) pour le second mode de fonctionnement (II).

2. Procédé selon la revendication 1, **caractérisé en ce qu'**on détermine, sur la base d'au moins ladite partie du nombre prédéterminé (N) de périodes, un rapport cyclique moyen (DC, $DC_{mean}$) qui est utilisé comme rapport cyclique initial (DC) pour le second mode de fonctionnement.

3. Procédé selon la revendication 1 ou 2, **caractérisé en ce qu'**après qu'une valeur limite de courant ($I_{SOLL,o,I}$, $I_{SOLL,u,I}$) a été atteinte, une autre modification de l'état de commutation de l'élément de commutation (T1) est effectuée au terme d'une durée de période d'une période respective.

4. Procédé selon au moins l'une des revendications précédentes, **caractérisé en ce que** le rapport cyclique initial (DC) devant être utilisé dans le second mode de fonctionnement est calculé en utilisant une durée moyenne d'au moins l'un des états de commutation de l'élément de commutation (T1) au cours d'au moins une partie du nombre (N) des périodes.

5. Procédé selon au moins l'une des revendications précédentes, **caractérisé en ce que** le rapport cyclique initial (DC) est calculé en utilisant un temps d'activation moyen de l'élément de commutation (T1) au cours d'au moins une partie du nombre (N) des périodes.

6. Procédé selon au moins l'une des revendications précédentes, **caractérisé en ce qu'**une durée de période (T) des périodes est prédéterminée au moyen d'un temporisateur.

7. Procédé selon au moins l'une des revendications précédentes, **caractérisé en ce que**, à partir d'un rapport cyclique initial (DC) déterminé dans le premier mode de fonctionnement (I), le rapport cyclique est prédéterminé pendant le second mode de fonctionnement (II) en prenant en compte au moins une valeur limite de courant ($I_{SOLL,u,II}$, $I_{SOLL,o,II}$).

8. Procédé selon au moins l'une des revendications précédentes, **caractérisé en ce que**, dans le deuxième mode de fonctionnement (II), une valeur de courant réelle ($I_{IST}$) est déterminée, un écart de régulation est détecté à partir de la valeur de courant réelle ($I_{IST}$) et d'une valeur de courant de consigne ($I_{SOLL}$) et l'écart de régulation est utilisé pour calculer un rapport cyclique (DC) de la modulation d'impulsions (PWM).

9. Ensemble circuit électronique pour la régulation en courant, par modulation d'impulsions (PWM), d'un courant de charge ($I_L$) d'une charge inductive (L) comprenant au moins un élément de commutation (T1) destiné à commuter le courant de charge ($I_L$) et un circuit de régulation (2) destiné à commander l'élément de commutation (T1), dans lequel l'ensemble circuit est conçu pour faire fonctionner la charge inductive (L) dans un premier mode de fonctionnement (I) lorsqu'une modification de la valeur de courant de consigne ($I_{SOLL}$) est effectuée, dans lequel, dans le premier mode de fonctionnement (I), on peut déterminer un rapport cyclique initial (DC) de la modulation d'impulsions (PWM) qui est prévu pour faire fonctionner la charge inductive (L) dans un second mode de fonctionnement (II), **caractérisé en ce que**, dans le premier mode de fonctionnement (I), un réglage d'un état de commutation de l'élément de commutation (T1) est effectué selon qu'une valeur de courant de consigne ($I_{SOLL}$) du courant de charge ($I_L$) est supérieure ou inférieure à une valeur de courant de consigne ($I_{SOLL,t-1}$) d'un cycle immédiatement précédent, dans lequel l'état de commutation est maintenu jusqu'à ce qu'une valeur limite de courant ($I_{SOLL,o,I}$, $I_{SOLL,u,I}$) soit atteinte et peut être commuté lorsque la valeur limite de courant ($I_{SOLL,o,I}$, $I_{SOLL,u,I}$) est atteinte, dans lequel on effectue une pluralité de commutations de l'état de commutation de l'élément de commutation (T1) pour générer un nombre prédéterminé (N) de périodes, et on détermine, sur la base d'au moins une partie desdites périodes, le rapport cyclique (DC, $DC_{mean}$) de la modulation d'impulsions (PWM) qui est utilisé comme rapport cyclique initial (DC) pour le second mode de fonctionnement (II).

# Fig. 1

Fig. 2

EP 3 381 119 B1

Fig. 3

# Fig. 4

S10

S11

Nein

Ja

S12

Ja          Nein

S13                    S14

**IN DER BESCHREIBUNG AUFGEFÜHRTE DOKUMENTE**

**In der Beschreibung aufgeführte Patentdokumente**

- DE 102010063744 A1
- DE 102014208066